# EUROPEAN PATENT SPECIFICATION

(11) **EP 2 889 632 B1**
(45) Date of publication and mention of the grant of the patent: **04.10.2017**
(21) Application number: 14200447.2
(22) Date of filing: 29.12.2014
(51) Int. Cl.: G01R 22/10, H02J 3/14, H02J 13/00

(54) **APPARATUS TO DISCONNECT AND RESTORE A SECONDARY ELECTRIC POWER NETWORK**
EINRICHTUNG ZUM UNTERBRECHEN UND VERBINDEN EINES ELEKTRISCHEN SEKUNDÄRNETZES
APPAREIL DE DÉCONNECTER ET DE RÉTABLIR UN RÉSEAU ÉLECTRIQUE SECONDAIRE

(30) Priority: 30.12.2013 IT UD20130177
(43) Date of publication of application: 01.07.2015
(73) Proprietor: Witikee SRL, 33100 Udine (IT)
(72) Inventor: Tonello, Andrea, 33100 Udine (IT); Versolatto, Fabio, 33037 Pasian di Prato (UD) (IT); D'Alessandro, Salvatore, 33100 Udine (IT)
(74) Representative: Petraz, Gilberto Luigi

(56) References cited:
- EP-A1- 2 426 854
- WO-A1-00/52806
- WO-A1-01/37392
- WO-A1-2010/048993
- US-A1- 2005 171 645
- US-A1- 2012 022 813

## Description

### FIELD OF THE INVENTION

Forms of embodiment described here concern an apparatus to disconnect a secondary electric power network and to restore power to the secondary electric power network from an arbitrary remote position.

In particular, forms of embodiment described here can be applied in electric networks of buildings, such as houses, industrial, commercial or public buildings, industrial plants or means of transport such as trains or ships.

### BACKGROUND OF THE INVENTION

Domestic and industrial electric power networks are generally fed by distribution lines of electric energy providers, through an electric meter, that is, an electronic device that monitors and records the consumption of energy and at the same time allows remote reading by said providers for accounting purposes.

Hereafter in the description, for ease of exposition, secondary electric power networks will be defined as the portion of domestic or industrial electric network downstream of the electric meter, while the main electric power network is the remaining portion upstream of the electric meter.

In general, the amount of energy that can be absorbed by a secondary electric power network is limited. For example, in Italy, the consumption of energy for individual residential users, expressed in terms of instantaneous power, currently provides a standard limit of 3kW.

When the consumption of energy exceeds that limit, an alarm is shown on the meter, and after a certain time the supply of energy is interrupted, typically by circuit breakers provided on the meter. To reactivate the supply of energy, these circuit breakers must be restored and in general this operation can be carried out only manually in situ, that is, acting on the meter itself.

Often, these electric meters are installed in dedicated spaces distant from the user device, with reduced accessibility, and consequently the alarm signals are not sufficient to warn the majority of users in time, since they do not have direct and visual access to the electric meter.

One particularly serious problem of these meters is that the restoration operation can be particularly laborious or difficult, especially if carried out without lighting, since in a condominium or small block of flats for example the meter may be installed on the ground floor, while the apartments of the individual users may be situated on different floors of the building.

The meters usually measure the consumption of energy continuously and the information is stored in the meter and transmitted to the electric power provider, while the user may not have access to the information.

Document US-A-2012/0022813 is known, which describes an electric network for a final user device provided with a main meter associated to a main safety fuse/circuit breaker. At exit from the main meter a main conductor is provided, to which a first current sensor is coupled, downstream of which the conductor branches off toward components that control discharge to earth, and from here toward network circuit breakers. Secondary network components, each provided with a socket that can be coupled with the connector of a conductor of a specific device of a final user device, branch off from each network circuit breaker.

In forms of embodiment described in document US-A-2012/0022813, other current sensors and circuit breakers controlled by a processing unit are provided downstream of the network circuit breakers, however no remote command units of the processing unit are provided.

In other forms of embodiment described in document US-A-2012/0022813, between each socket and each connector a measuring device can be provided. These remote measuring devices are thus distributed in the entire secondary electric power network that is associated to the secondary network components. Each measuring device can be provided with a signal processor, a second current sensor and a circuit breaker. A processing unit is also provided, connected to the first sensor and able to control each measuring device through a communication connection. On the basis of the signals received and of pre-memorized information, the processing unit can decide which circuit breaker to position in a condition to interrupt the current if a certain consumption threshold is exceeded, or if a high intensity of current is consumed, or again it can automatically reactivate user devices previously switched off. In particular the processing unit can automatically switch off one or more parts of the network, for example if a network overload has happened or is about to happen. However, the measuring devices cannot control the functioning of the processing unit.

Therefore, it is always the processing unit that has control of the measuring devices distributed throughout the secondary electric network.

The main purpose of document US-A-2012/0022813 is to preserve the main fuse, in the event of power overload or anomalous current absorption, selectively disconnecting user devices which - being monitored - detect anomalous behavior. Therefore, document US-A-2012/0022813 must necessarily provide a complex architecture with measuring devices distributed in a capillary manner in the secondary electric network and with monitoring of the current absorbed by each user device. This distributed architecture, however, is very costly and can be invasive and complex to install. Moreover, the fact that the user devices are controlled automatically does not leave space to intervene manually, at one's discretion, in restoring the user devices according to needs.

There is therefore a need to perfect an apparatus to disconnect and restore a secondary electric power network that can overcome at least one of the disadvantages of the state of the art.

In particular, one purpose of the present invention is to produce an apparatus that allows to prevent disconnection by the meter of a secondary electric power network easily, quickly and conveniently, and which is also economical, rapid and not invasive to install.

Another purpose of the present invention is to produce an apparatus that allows to facilitate the management of electric energy consumption in an electric power network, in a house, an industrial building, an industrial plant or suchlike.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

Forms of embodiment described here concern an apparatus to disconnect a secondary electric power network of a user device, connected to an electric meter in turn connected to a main electric power network, and to restore the electric power of said secondary electric power network upon a remote manual restoration command.

By user device we mean a building, a dwelling, an industrial, commercial or public building, or an industrial plant, or a means of transport such as a train or ship.

According to one form of embodiment, the apparatus comprises a single base station external to said secondary electric power network and connected directly downstream of said electric meter and upstream of said secondary electric power network, without any other intermediate component interposed between said electric meter and the secondary electric power network, and at least a remote station, separate from the base station and configured for the remote manual control of said base station.

The base station comprises a measuring device configured to measure at least one electric parameter of electric energy delivered by the main electric power network to the secondary electric power network and supplied by the electric meter, a circuit breaker device configured to selectively interrupt and restore the electric power of said secondary electric power network, and to prevent the disconnection by the electric meter if there is overload, a base communication unit configured to receive at least remote restoration signals of the circuit breaker device, and a control unit, configured at least to control a selective disconnection of the secondary electric power network by the circuit breaker device based on measured values of said electric parameter.

The remote station comprises a remote manual command device, configured to supply a restoration command of the circuit breaker device of the base station, and a remote communication unit configured at least to send the restoration command generated in the form of electric or electromagnetic signals, for example radio signals, to the base communication unit.

The apparatus thus made allows to restore the supply of electric energy from a distance. Indeed, the base station is configured to disconnect the secondary electric power network before the intervention of the electric meter of the electric energy distributor, thus preventing the latter from intervening, interrupting the supply of energy.

The remote station allows to restore the electric energy from a distance, restoring the circuit breaker device of the base station, communicating by means of electric or electromagnetic signals with the latter.

In some forms of embodiment, the remote station can be integrated in a portable command device such as a remote control, and the communication to the base station can be wireless, by radio for example.

This configuration can allow a user, for example, to move in different areas of a dwelling to selectively disconnect the different apparatuses connected to the secondary electric power network and responsible for the absorption of excess electric energy, in order to reduce overall consumption of electric energy.

In other forms of embodiment, the remote station can be connected to the secondary electric power network, directly on an electric board for example or on an electric power socket, and communication with the base station can be wireline, through the electric lines for example.

In some forms of embodiment, the base station and/or the remote station can provide display devices. In this configuration it is possible to display electric parameters relating to the electric energy supplied, allowing users to easily manage the energy consumption of the secondary power network of a dwelling or a plant. Moreover, in this configuration, the information on consumption can be transmitted from the base station to the remote station by the base and remote communication units.

Further forms of embodiment described here concern a method to disconnect a secondary electric power network of a user device connected to an electric meter, in turn connected to a main electric power network, and to restore the power of said secondary electric power network with a remote manual command. According to one form of embodiment the method comprises:
- connecting a single base station external to said secondary electric power network, directly downstream of said electric meter and upstream of said secondary electric power network, without any other intermediate component interposed between said electric meter and said secondary electric power network,
- making available at least a remote station, separate from said base station, which allows the remote manual control of said base station,
- measuring, by means of said base station, at least one electric parameter associated to the electric energy delivered by the main electric power network to the secondary electric power network, and supplied by the electric meter,

- selectively interrupting and restoring the electric power of said secondary electric power network by means of a circuit breaker device of the base station, in order to prevent disconnection by the electric meter,
- receiving remote signals at least to restore said circuit breaker device by means of a base communication unit of the base station,
- controlling a selective disconnection of the secondary electric power network by the circuit breaker device by means of a control unit of the base station on the basis of measured values of said electric parameter,
- manually supplying a restoration command of said circuit breaker device by means of a remote manual command device located in the remote station,
- sending said restoration command generated in the form of electric or electromagnetic signals to said base communication unit by means of a remote communication unit of the remote station.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic view of some forms of embodiment of a disconnection and restoration apparatus for a secondary electric power network;
- fig. 2 is a schematic view of some forms of embodiment of a component of a disconnection and restoration apparatus according to the present invention;
- fig. 3 is a schematic view of some forms of embodiment of another component of a disconnection and restoration apparatus according to the present invention.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

Forms of embodiment described here concern an apparatus 10 to disconnect a secondary electric power network 14 of a user device 13 connected to an electric meter 15 connected in its turn to a main electric power network 30, indicated hereafter also as distribution and restoration line of the electric power of said secondary electric power network 14 upon a remote manual restoration command.

The apparatus 10 comprises a single base station 11 external to the secondary electric power network 14 and connected directly downstream of the electric meter 15 and upstream of said secondary electric power network 14, without any other intermediate component interposed between the electric meter 15 and the secondary electric power network 14.

The apparatus 10 also comprises at least one remote station 12, separate from the base station 11 and configured for the remote manual control of said base station 11.

In possible implementations, the base station 11 comprises a measuring device 16, configured to measure at least one electric parameter of electric energy delivered by the main electric power network 30 to the secondary electric power network 14, and supplied by the electric meter 15.

In possible implementations, the base station 11 comprises a circuit breaker device 18, configured to selectively interrupt and restore the electric power of said secondary electric power network 14, in order to prevent disconnection by the electric meter 15.

In possible implementations, the base station 11 also comprises a base communication unit 17, configured to receive at least remote restoration signals of the circuit breaker device 18, and a control unit 22 configured at least to control a selective disconnection of the secondary electric power network 14 by the circuit breaker device 18 based on measured values of said electric parameter.

In possible implementations, the remote station 12 comprises a remote manual command device 24, configured to supply a restoration command of the circuit breaker device 18 of the base station 11, and a remote communication unit 23 configured at least to send said restoration command generated in the form of electric or electromagnetic signals, for example radio signals, to said base communication unit 17.

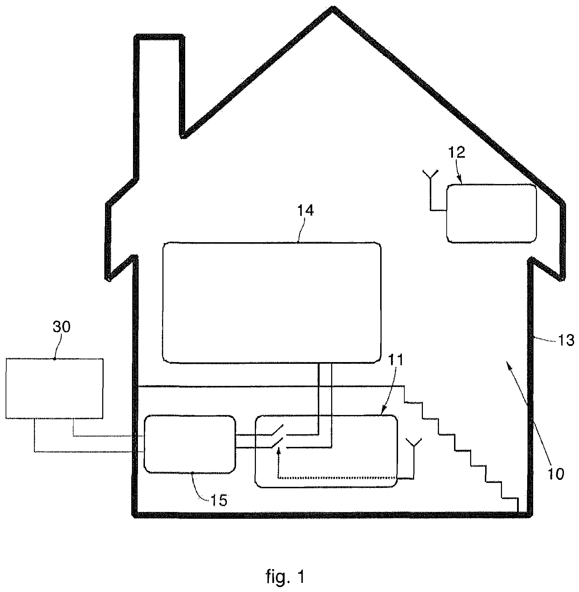

Fig. 1 is used to describe forms of embodiment of an apparatus 10 to disconnect and restore a secondary electric power network 14 of a user device 13, such as a building, a dwelling, an industrial, commercial or public building, or industrial plants, or means of transport such as a train or ship.

The apparatus 10 is configured to disconnect the secondary electric power network 14 from the electric meter 15 that feeds electric energy to the secondary electric power network 14.

The electric meter 15 typically receives electric energy from the main electric power network 30 and measures the amount of electric energy delivered by the latter to the secondary electric power network 14.

In some forms of embodiment, the apparatus 10 comprises the base station 11 interposed, during use, between the electric meter 15 and the secondary electric power network 14. In particular, the base station 11 thus disposed is directly downstream of the electric meter 15 and upstream of the secondary electric power network 14 with respect to the direction of feed of electric energy.

In some forms of embodiment, the base station 11 can be disposed in proximity to the electric meter 15, for example inside the same technical compartment or inside a dedicated technical compartment.

The apparatus 10 also comprises at least said remote station 12.

The remote station 12 is typically separate from the base station 11. While the base station 11 must always be positioned upstream of the secondary electric circuit, the remote station 12 can be positioned arbitrarily, for example, in a room of a private dwelling or inside an industrial warehouse, or it can be a portable device.

The lines of dashes in the following drawings identify optional components and connections with respect to preferential configurations of the present invention.

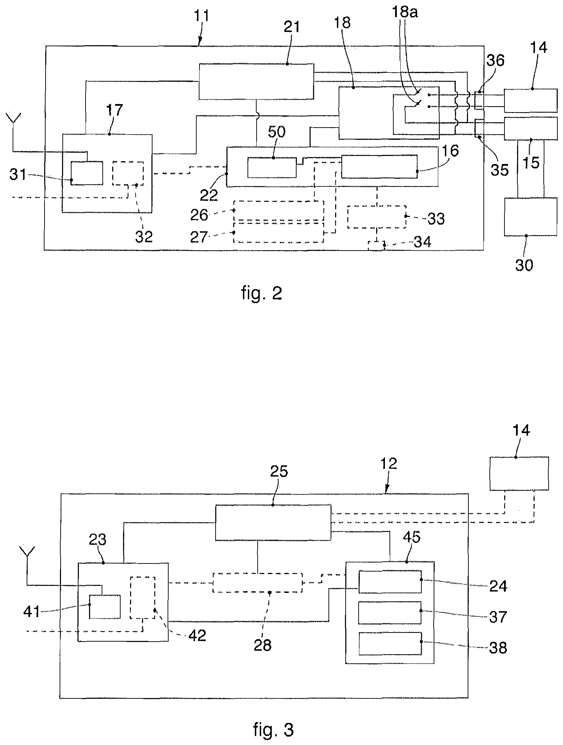

In forms of embodiment described with reference to fig. 2, the base station 11 is provided with said measuring device 16 configured to measure at least one electric parameter associated to the electric energy supplied by the electric meter 15 to the secondary electric power network 14.

Typically the parameter detected by the measuring device 16 is the power supplied by the main electric power network 30 to the secondary electric power network 14. The choice of power can be advantageous since it is the parameter usually used by the electric meter 15 to measure the electric energy supplied.

In other forms of embodiment, the electric parameter can be a current or a voltage.

The base station 11 also comprises the circuit breaker device 18, configured to selectively interrupt and restore the electric power to the secondary electric power network 14.

The circuit breaker device 18 can include, for example, one or more circuit breakers 18a to interrupt one or more conductors.

The circuit breaker device 18 can be an electric circuit breaker device of any known type and can comprise a relay for example. Otherwise the circuit breaker device can be an electronic circuit breaker device.

In some forms of embodiment, the base station 11 comprises said base communication unit 17 configured to receive electric or electromagnetic signals, such as radio signals.

In particular the base communication unit 17 is configured to receive at least an electric or electromagnetic signal to restore the circuit breaker device 18.

Moreover the base communication unit 17 can be configured to transmit data relating to consumption or to transmit information concerning the devices connected to the secondary electric network that absorb electric energy at certain moments of time.

In other forms of embodiment, the base communication unit 17 can include a cable communication device 32.

The cable communication device 32, merely by way of example, can implement a PLC (Power Line Communication) technology.

In some forms of embodiment, the base communication unit 17 can comprise a wireless communication device 31.

The wireless communication device 31 can implement a radio wave technology, chosen for example from either Zigbee, Bluetooth or Wi-fi.

In forms of embodiment described with reference to fig. 2, the base station 11 comprises said control unit 22.

The control unit 22 is configured at least to control a selective disconnection of the secondary electric power network 14 by the circuit breaker device 18, on the basis of values of the electric parameter measured by the measuring device 16.

In some forms of embodiment, the control unit 22 can carry out the disconnection comparing the values coming from the measuring device 16 with a pre-set threshold value.

The pre-set threshold value can be for example a pre-chosen instantaneous value of the electric parameter to be monitored, for example a value of instantaneous power, typically less than the value of power at which the disconnection of the electric meter 15 occurs.

In other forms of embodiment, the control unit 22 can disconnect the circuit breaker device 18 if the instantaneous power remains above a determinate value threshold for an extended period of time.

Therefore, the control unit 22 can command the disconnection of the secondary electric power network 14 from the distribution line 30 before the electric meter 15 intervenes.

In some forms of embodiment, the control unit 22 can be the programmable type. The control unit 22 can comprise, by way of example, a micro-controller or a micro-processor of the known type.

In possible forms of embodiment, for example using the measurement of instantaneous power, the control unit 22 can implement disaggregation algorithms in order to identify individual electric devices that absorb electric energy, connected to the secondary electric power network 14.

In other forms of embodiment, the control unit 22 can be configured to recognize the presence of malfunctions and/or short circuits on the secondary electric power network 14 or on electric devices connected to it. In this case, the circuit breaker device 18 can intervene to disconnect the secondary electric power network 14 in order to protect it.

In other forms of embodiment, the base station 11 can comprise a timer device 50 configured to determine intervals of time to command at least the disconnection of the circuit breaker device 18.

The timer device 50 can be, by way of example, an electronic timer.

In forms of embodiment described according to fig. 2, the timer device 50 can be integrated in the control unit 22.

For example, the timer device 50 can be configured to carry out a countdown for a pre-established period of time. The control unit 22 can therefore disconnect the circuit breaker device 18 if the electric parameter remains above the pre-set threshold value for said pre-established period of time.

In forms of embodiment described using fig. 2, the measuring device 16 can be integrated in the control unit 22.

In some forms of embodiment, the measuring device 16 can be integrated in the circuit breaker device 18.

In some forms of embodiment, the base station 11 can comprise at least a memorization device 33.

The memorization device 33 can be used to memorize values of the parameter measured by the measuring device 16. In this way, using the memorization device 33, it is possible for example to trace the development of the electric energy delivered over time, or to display interruptions of the delivery of the electric energy supplied to the secondary electric power network 14.

The memorization device 33 can comprise for example a non-volatile memory such as an SSD card or other similar or comparable memory cards.

In some forms of embodiment, the base station 11 can include a connection port upstream 35 for connection to the electric meter 15.

The base station 11 can also comprise a connection port downstream 36 for connection to the secondary electric power network 14.

The connection port upstream 35 and the connection port downstream 36 can be connected to the circuit breaker device 18 (see fig. 2 for example).

In particular, the connection port downstream 36 can be connected to the two circuit breakers 18a of the circuit breaker device 18.

In some forms of embodiment, the base station 11 can comprise a display device 26.

The display device 26 can be configured, for example, to display values of measured power, or parameters connected to the energy consumption of the power network.

In some forms of embodiment, the base station 11 can include an alarm device 27, such as, by way of example, an acoustic signaler or a warning light.

The alarm device 27 can be used to signal anomalous or high energy consumption to a user.

The base station 11 typically comprises an electric feeder 21 to power the internal components, such as for example the base communication unit 17, the control unit 22 and/or the measuring device 16.

In some forms of embodiment, the electric feeder 21 can comprise an electric battery or an electric accumulator.

In some forms of embodiment, the electric feeder 21 can be directly connected to the electric meter 15, or through the connection port upstream 35.

In some forms of embodiment, the base station 11 can include a data port 34 such as a USB port.

In some forms of embodiment, the data port 34 can be suitable for example for the extraction of data memorized in the memorization device 33.

In some forms of embodiment, the data port 34 can also be used to introduce data, for example to program the control unit 22, if the latter is the programmable type.

In forms of embodiment described with reference to fig. 3, the remote station 12 comprises said remote manual command device 24 configured to supply a command to restore the circuit breaker device 18. As we said, the remote manual command device 24 can be activated manually by the user, who therefore has full freedom to intervene on the restoration at his/her discretion, according to needs. In this way, the remote station 12 has control of the base station 11.

The remote manual command device 24 can comprise a manual selector for example, such as a button or a lever.

In possible implementations, the remote station 12 comprises the remote communication unit 23.

The remote communication unit 23 can be configured to send at least the restoration command generated by the remote manual command device 24 in the form of electric or electromagnetic signals.

The restoration command sent by the remote communication unit 23 is acquired by the base communication unit 17 which, in its turn, allows the restoration of the circuit breaker device 18.

In other forms of embodiment, the remote communication unit 23 can also be configured to send a disconnection signal generated by the remote manual command device 24, in the form of electric or electromagnetic signals.

The disconnection command sent by the remote communication unit 23 is acquired by the base communication unit 17 which in its turn allows the disconnection of the circuit breaker device 18.

In some forms of embodiment, the remote station 12 can be comprised in the secondary electric power network 14, for example, in the electric board of a dwelling or connected to an electric power socket of the power network.

In other forms of embodiment, the remote station 12 can be comprised in a portable command device, in particular a remote control device.

In other forms of embodiment, the remote station 12 can be comprised in an emergency signaling light to facilitate the identification of the remote station 12 itself.

In some forms of embodiment, the apparatus 10 can comprise a plurality of remote stations 12, disposed for example in different rooms of a dwelling.

In some forms of embodiment, the remote station 12 can include a display device 37.

The display device 37 can be configured to display the consumption of electric energy or the instantaneous power supplied to the secondary electric power network 14 by the distribution line 30.

In some forms of embodiment, the remote station 12 can comprise an alarm device 38.

The alarm device 38 can be used to signal anomalous or high consumption of energy to a user.

In some forms of embodiment, information concerning electricity consumption of the secondary electric power network 14 are transmitted from the base station 11 through the base communication unit 17 and received by the remote station 12 through the remote communication unit 23.

In some forms of embodiment, the display device 37 can be configured to allow the user to display electric devices, connected to the secondary electric power network 14, that absorb electric energy. In particular, these electric devices can be identified by the base station 17 through said disaggregation algorithms.

In some forms of embodiment, the remote station 12 can comprise a control unit 28 configured to manage the functions carried out by the remote manual command device 24, by the display device 37 and/or by the alarm device 38.

In some forms of embodiment, the remote communication unit 23 can comprise a cable communication device 42.

The cable communication device 42 can implement, by way of example, a PLC (Power Line Communication).

In some forms of embodiment, the remote communication unit 23 can comprise a wireless communication device 41.

The wireless communication device 41 can implement a radio wave technology, chosen for example from either Zigbee, Bluetooth or Wi-fi.

The remote station 12 typically comprises an electric power unit 25 to power the internal components, such as, by way of example, the remote communication unit 23, the control unit 28, the integrated device 45.

The electric power unit 25 can comprise an electric battery or an electric accumulator.

In some forms of embodiment, the electric power unit 25 can be connected directly to the secondary electric power network 14, for example to recharge an electric accumulator.

In possible implementations described using fig. 3, the remote manual command device 24, the display device 37 and/or the alarm device 38 can be integrated in an integrated device 45, such as a touch-screen for example.

It is clear that modifications and/or additions of parts may be made to the apparatus to disconnect and restore power to an electric power network as described heretofore, without departing from the field and scope of the present invention.

It is also clear that, although the present invention has been described with reference to some specific examples, a person of skill in the art shall certainly be able to achieve many other equivalent forms of apparatus to disconnect and restore power to an electric power network, having the characteristics as set forth in the claims and hence all coming within the field of protection defined thereby.

Although the above refers to forms of embodiment of the invention, other forms of embodiment can be provided without departing from the main field of protection, which is defined by the following claims.

## Claims

1. Apparatus to disconnect a secondary electric power network (14) of a user device (13) connected to an electric meter (15) in turn connected to a main electric power network (30) and to restore the electric power of said secondary electric power network (14) upon a remote manual restoration command, **characterized in that** it comprises a single base station (11) external to said secondary electric power network (14) and connected directly downstream of said electric meter (15) and upstream of said secondary electric power network (14) without any other intermediate component interposed between said electric meter (15) and said secondary electric power network (14), and at least one remote station (12), separate from said base station (11) and configured for the remote manual control of said base station (11), **in that** said base station (11) comprises internally a measuring device (16) configured to measure at least one electric parameter associated with the electric energy delivered by the main electric power network (30) to the secondary electric power network (14), and supplied by the electric meter (15), a circuit breaker device (18) configured to selectively interrupt and restore the electric power of said secondary electric power network (14), in order to prevent disconnection by said electric meter (15), a base communication unit (17) configured to receive at least remote restoration signals of said circuit breaker device (18) and a control unit (22) configured at least to control a selective disconnection of the secondary electric power network (14) by the circuit breaker device (18) based on measured values of said electric parameter, **and in that** said remote station (12) comprises a remote manual control device (24), configured to supply a restoration command of said circuit breaker device (18) of said base station (11) and a remote communication unit (23) configured at least to send said restoration command generated in the form of electric or electromagnetic signals to said base communication unit (17).

2. Apparatus as in claim 1, **characterized in that** said base communication unit (17) and said remote communication unit (23) each comprise a wireless communication device (31, 41) and/or a cable communication device (32, 42).

3. Apparatus as in any claim hereinbefore, **characterized in that** said remote station (12) is comprised in a portable command device, in particular a portable remote control.

4. Apparatus as in any claim hereinbefore, **characterized in that** said remote station (12) is comprised in said secondary electric power network (14).

5. Apparatus as in any claim hereinbefore, **characterized in that** said control unit (22) comprises a microcontroller, or a microprocessor, both programmable, to command at least the disconnection of the circuit breaker device (18).

6. Apparatus as in any claim hereinbefore, **characterized in that** said base station (11) comprises a timer device (50) configured to determine intervals of time to command at least the disconnection of said circuit breaker device (18).

7. Apparatus as in any claim hereinbefore, **characterized in that** at least one of either the base station (11) or the remote station (12) comprises a display device (26, 37).

8. Apparatus as in any claim hereinbefore, **characterized in that** at least one of either the base station (11) or the remote station (12) comprises an alarm device (27, 38).

9. Apparatus as in any claim hereinbefore, **characterized in that** said remote station (12) comprises a control unit (28).

10. Apparatus as in any claim hereinbefore, **characterized in that** said base station (11) comprises at least a memorization device (33) and/or a data port (34).

11. Method to disconnect a secondary electric power network (14) of a user device (13) connected to an electric meter (15) in turn connected to a main electric power network (30) and to restore the power of said secondary electric power network (14) with a remote manual command, **characterized in that** it comprises:
- connecting a single base station (11) external to said secondary electric power network (14), directly downstream of said electric meter (15) and upstream of said secondary electric power network (14), without any other intermediate component interposed between said electric meter (15) and said secondary electric power network (14), the single base station (11) comprising as internal components a measuring device (16), a circuit breaker device (18), a base communication unit (17) and a control unit (22),
- making available at least a remote station (12), separate from said base station (11), that allows the remote manual control of said base station (11),
- measuring, by means of the measuring device (16) of said base station (11), at least one electric parameter associated to the electric energy delivered by the main electric power network (30) to the secondary electric power network (14), and supplied by the electric meter (15),
- selectively interrupting and restoring the electric power of said secondary electric power network (14) by means of the circuit breaker device (18) of the base station (11), in order to prevent disconnection by the electric meter (15),
- receiving remote signals at least to restore said circuit breaker device (18) by means of the base communication unit (17) of the base station (11),
- controlling a selective disconnection of the secondary electric power network (14) by the circuit breaker device (18) by means of the control unit (22) of the base station (11) on the basis of measured values of said electric parameter,
- manually supplying a restoration command of said circuit breaker device (18) by means of a remote manual command device (24) of the remote station (12),
- sending said restoration command generated in the form of electric or electromagnetic signals to said base communication unit (17) by means of a remote communication unit (23) of the remote station (12).

## Patentansprüche

1. Vorrichtung zum Trennen eines sekundären Stromnetzes (14) eines Benutzergeräts (13), das an einen Stromzähler (15) angeschlossen ist, der wiederum an ein Hauptstromnetz (30) angeschlossen ist, und zum Wiederherstellen des Stroms des sekundären Stromnetzes (14) nach einem manuellen Wiederherstellungsbefehl aus der Ferne, **dadurch gekennzeichnet, dass** sie eine einzige Basisstation (11), die bezüglich des sekundären Stromnetzes (14) extern und direkt stromabwärts des Stromzählers (15) und stromaufwärts des sekundären Stromnetzes (14) ohne irgendeine sonstige Zwischenkomponente zwischen dem Stromzähler (15) und dem sekundären Stromnetz (14) angeschlossen ist, und mindestens eine Fernstation (12), die von der Basisstation (11) getrennt ist und zur manuellen Steuerung aus der Ferne der Basisstation (11) konfiguriert ist, umfasst, **dass** die Basisstation (11) im Inneren folgende Komponenten umfasst: ein Messgerät (16), das konfiguriert ist, um mindestens einen elektrischen Parameter zu messen, der mit der elektrischen Energie verknüpft ist, die von dem Hauptstromnetz (30) zu dem sekundären Stromnetz (14) geliefert wird und von dem Stromzähler (15) zugeführt wird, ein Trennschaltergerät (18), das konfiguriert ist, um gezielt den Strom des sekundären Stromnetzes (14) zu unterbrechen und wiederherzustellen, um eine Trennung durch den Stromzähler (15) zu verhindern, eine Basiskommunikationseinheit (17), die konfiguriert ist, um mindestens Fernwiederherstellungssignale des Trennschaltergeräts (18) zu empfangen, und eine Steuereinheit (22), die konfiguriert ist, um mindestens eine gezielte Trennung des sekundären Stromnetzes (14) durch das Trennschaltergerät (18) basierend auf gemessenen Werten des elektrischen Parameters zu steuern, **und dass** die Fernstation (12) folgendes umfasst: ein manuelles Fernsteuerungsgerät (24), das konfiguriert ist, um einen Wiederherstellungsbefehl des Trennschaltergeräts (18) der Basisstation (11) zuzuführen, und eine Fernkommunikationseinheit (23), die konfiguriert ist, um mindestens den Wiederherstellungsbefehl, der in Form von elektrischen oder elektromagnetischen Signalen erzeugt wird, zu der Basiskommunikationseinheit (17) zu senden.

2. Vorrichtung nach Anspruch 1, **dadurch gekennzeichnet, dass** die Basiskommunikationseinheit (17) und die Fernkommunikationseinheit (23) jeweils ein drahtloses Kommunikationsgerät (31, 41) und/oder ein Kabelkommunikationsgerät (32, 42) umfassen.

3. Vorrichtung nach einem der vorherigen Ansprüche, **dadurch gekennzeichnet, dass** die Fernstation (12) in einem tragbaren Steuergerät, insbesondere einer tragbaren Fernsteuerung, enthalten ist.

4. Vorrichtung nach einem der vorherigen Ansprüche, **dadurch gekennzeichnet, dass** die Fernstation (12) in dem sekundären Stromnetz (14) enthalten ist.

5. Vorrichtung nach einem der vorherigen Ansprüche, **dadurch gekennzeichnet, dass** die Steuereinheit (22) einen Mikrocontroller oder einen Mikroprozessor umfasst, die beide programmiert werden können, um mindestens die Trennung des Trennschaltergeräts (18) anzuweisen.

6. Vorrichtung nach einem der vorherigen Ansprüche, **dadurch gekennzeichnet, dass** die Basisstation (11) ein Zeitgebergerät (50) umfasst, das konfiguriert ist, um Zeiträume zu bestimmen, um mindestens die Trennung des Trennschaltergeräts (18) anzuweisen.

7. Vorrichtung nach einem der vorherigen Ansprüche, **dadurch gekennzeichnet, dass** mindestens eine der Basisstation (11) oder der Fernstation (12) ein Anzeigegerät (26, 37) umfasst.

8. Vorrichtung nach einem der vorherigen Ansprüche, **dadurch gekennzeichnet, dass** mindestens eine der Basisstation (11) oder der Fernstation (12) ein Alarmgerät (27, 38) umfasst.

9. Vorrichtung nach einem der vorherigen Ansprüche, **dadurch gekennzeichnet, dass** die Fernstation (12) eine Steuereinheit (28) umfasst.

10. Vorrichtung nach einem der vorherigen Ansprüche, **dadurch gekennzeichnet, dass** die Basisstation (11) mindestens ein Speichergerät (33) und/oder einen Datenanschluss (34) umfasst.

11. Verfahren zum Trennen eines sekundären Stromnetzes (14) eines Benutzergeräts (13), das an einen Stromzähler (15) angeschlossen ist, der wiederum an ein Hauptstromnetz (30) angeschlossen ist, und zum Wiederherstellen des Stroms des sekundären Stromnetzes (14) mit einem manuellen Befehl aus der Ferne, **dadurch gekennzeichnet, dass** es Folgendes umfasst:
- Anschließen einer einzigen Basisstation (11), die bezüglich des sekundären Stromnetzes (14) extern ist, direkt stromabwärts des Stromzählers (15) und stromaufwärts des sekundären Stromnetzes (14), ohne irgendeine sonstige Zwischenkomponente zwischen dem Stromzähler (15) und dem sekundären Stromnetz (14),
wobei die einzige Basisstation (11) als interne Komponenten ein Messgerät (16), ein Trennschaltergerät (18), eine Basiskommunikationseinheit (17) und eine Steuereinheit (22) umfasst,
- Bereitstellen mindestens einer Fernstation (12), die von der Basisstation (11) getrennt ist, die die manuelle Fernsteuerung der Basisstation (11) ermöglicht,
- Messen durch das Messgerät (16) der Basisstation (11) mindestens eines elektrischen Parameters, der mit der elektrischen Energie verknüpft ist, die von dem Hauptstromnetz (30) zu dem sekundären Stromnetz (14) geliefert wird und von dem Stromzähler (15) zugeführt wird,
- gezieltes Unterbrechen und Wiederherstellen des Stroms des sekundären Stromnetzes (14) durch das Trennschaltergerät (18) der Basisstation (11), um eine Trennung durch den Stromzähler (15) zu verhindern,
- Empfangen von Fernsignalen mindestens zum Wiederherstellen des Trennschaltergeräts (18) durch die Basiskommunikationseinheit (17) der Basisstation (11),
- Steuern einer gezielten Trennung des sekundären Stromnetzes (14) durch das Trennschaltergerät (18) durch die Steuereinheit (22) der Basisstation (11) auf Grundlage der gemessenen Werte des elektrischen Parameters,
- manuelles Zuführen eines Wiederherstellungsbefehls des Trennschaltergeräts (18) durch ein manuelles Fernsteuerungsgerät (24) der Fernstation (12),
- Senden des Wiederherstellungsbefehls, der in Form von elektrischen oder elektromagnetischen Signalen erzeugt wird, zu der Basiskommunikationseinheit (17) durch eine Fernkommunikationseinheit (23) der Fernstation (12) .

## Revendications

1. Appareil pour déconnecter un réseau d'alimentation électrique secondaire (14) d'un dispositif d'utilisateur (13) connecté à un compteur électrique (15) à son tour connecté à un réseau d'alimentation électrique principal (30) et pour rétablir l'alimentation électrique dudit réseau d'alimentation électrique secondaire (14) suite à une commande de restauration manuelle à distance, **caractérisé en ce qu**'il comprend une station de base unique (11) externe audit réseau d'alimentation électrique secondaire (14) et directement connecté en aval dudit compteur électrique (15) et en amont dudit réseau d'alimentation électrique secondaire (14) sans aucun autre composant intermédiaire interposé entre ledit compteur électrique (15) et ledit réseau électrique secondaire (14), et au moins une station à distance (12), séparée de ladite station de base (11) et configurée pour la commande manuelle à distance de ladite station de base (11), **en ce que** ladite station de base (11) comprend, à son intérieur, un appareil de mesure (16) conçu pour mesurer au moins un paramètre électrique associé à l'énergie électrique transférée par le réseau d'alimentation électrique principal (30) au réseau d'alimentation électrique secondaire (14), et fournie par le compteur électrique (15), un dispositif disjoncteur (18) conçu pour couper et rétablir de façon sélective l'alimentation électrique dudit réseau d'alimentation électrique secondaire (14), afin d'empêcher la déconnexion par ledit compteur électrique (15), une unité de communication de base (17) conçue pour recevoir au moins les signaux de restauration à distance dudit dispositif disjoncteur (18) et une unité de commande (22) conçue au moins pour commander une déconnexion sélective du réseau d'alimentation électrique secondaire (14) par le dispositif disjoncteur (18) basé sur les valeurs mesurées dudit paramètre électrique, et **en ce que** ladite station à distance (12) comprend un dispositif de commande manuelle à distance (24), conçu pour fournir une commande de restauration dudit dispositif disjoncteur (18) de ladite station de base (11) et une unité de communication à distance (23) conçue au moins pour envoyer ladite commande de restauration générée sous la forme de signaux électriques ou électromagnétiques de ladite unité de communication de base (17).

2. Appareil selon la revendication 1, **caractérisé en ce que** ladite unité de communication de base (17) et ladite unité de communication à distance (23) comprennent chacune un dispositif de communication sans fil (31, 41) et/ou un dispositif de communication par câble (32, 42).

3. Appareil selon n'importe laquelle des revendication précédentes, **caractérisé en ce que** ladite station à distance (12) est comprise dans un dispositif de commande portable, notamment une commande a distance portable.

4. Appareil selon n'importe laquelle des revendications précédentes, **caractérisé en ce que** ladite station à distance (12) est comprise dans ledit réseau d'alimentation électrique secondaire (14).

5. Appareil selon n'importe laquelle des revendications précédentes, **caractérisé en ce que** ladite unité de commande (22) comprend un microcontrôleur programmable ou un microprocesseur programmable, pour commander au moins la déconnexion du dispositif disjoncteur (18).

6. Appareil selon n'importe laquelle des revendication précédentes, **caractérisé en ce que** ladite station de base (11) comprend un dispositif de minuterie (50) conçu pour déterminer des intervalles de temps pour commander au moins la déconnexion du dispositif disjoncteur (18).

7. Appareil selon n'importe laquelle des revendications précédentes, **caractérisé en ce qu**'au moins un de la station de base (11) et de la station à distance (12) comprend un dispositif d'affichage (26, 37).

8. Appareil selon n'importe laquelle des revendications précédentes, **caractérisé en ce qu**'au moins un de la station de base (11) et de la station à distance (12) comprend un dispositif d'alarme (27, 38).

9. Appareil selon n'importe laquelle des revendications précédentes, **caractérisé en ce que** ladite station à distance (12) comprend une unité de commande (28).

10. Appareil selon n'importe laquelle des revendications précédentes, **caractérisé en ce que** ladite station de base (11) comprend au moins un dispositif de mémorisation (33) et/ou un port de données (34).

11. Procédé pour déconnecter un réseau d'alimentation électrique secondaire (14) d'un dispositif d'utilisateur (13) connecté à un compteur électrique (15) à son tour connecté à un réseau d'alimentation électrique principal (30) et pour rétablir l'alimentation électrique dudit réseau d'alimentation électrique secondaire (14) suite à une commande de manuelle à distance, **caractérisé en ce qu**'il comprend les étapes consistant à :
- connecter une station de base unique (11) externe audit réseau d'alimentation électrique secondaire (14), directement en aval dudit compteur électrique (15) et en amont dudit réseau d'alimentation électrique secondaire (14) sans aucun autre composant intermédiaire interposé entre ledit compteur électrique (15) et ledit réseau électrique secondaire (14), la station de base unique (11) comprenant, comme composants internes, un dispositif de mesure (16), un dispositif disjoncteur (18), une unité de communication de base (17) et une unité de commande (22),
- mettre à disposition au moins une station à distance (12), séparée de ladite station de base (11), qui permet la commande manuelle à distance de ladite station de base (11),
- mesurer, au moyen du dispositif de mesure (16) de ladite station de base (11), au moins un paramètre électrique associé à l'énergie électrique transférée par le réseau d'alimentation électrique principale (30) au réseau d'alimentation électrique secondaire (14), et alimenté par le compteur électrique (15),
- couper et rétablir de façon sélective l'alimentation électrique dudit réseau d'alimentation électrique secondaire (14), au moyen du dispositif disjoncteur (18) de la station de base (11), afin d'empêcher la déconnexion par le compteur électrique (15),
- recevoir des signaux à distance au moins pour rétablir ledit dispositif disjoncteur (18) par le biais de l'unité de communication de base de la station de base (11),
- commander une déconnexion sélective du réseau d'alimentation électrique secondaire (14) par le dispositif disjoncteur (18) par le biais de l'unité de commande (22) de la station de base (11) sur la base des valeurs mesurées dudit paramètre électrique,
- fournir manuellement une commande de restauration dudit dispositif disjoncteur (18) au moyen d'un dispositif de commande manuel à distance (24) de la station à distance (12),
- envoyer ladite commande de restauration générée sous la forme de signaux électriques ou électromagnétiques à la dite unité de communication de base (17) par le biais d'une unité de communication à distance (23) de la station à distance (12).
